(19) Europäisches Patentamt
European Patent Office
Office européen des brevets

(11) **EP 3 265 300 B1**

(12) **EUROPÄISCHE PATENTSCHRIFT**

(45) Veröffentlichungstag und Bekanntmachung des Hinweises auf die Patenterteilung:
**04.12.2024 Patentblatt 2024/49**

(21) Anmeldenummer: **15807635.6**

(22) Anmeldetag: **07.12.2015**

(51) Internationale Patentklassifikation (IPC):
**B29C 73/16** (2006.01)    **B29L 30/00** (2006.01)

(52) Gemeinsame Patentklassifikation (CPC):
**B29C 73/166;** B29L 2030/00

(86) Internationale Anmeldenummer:
**PCT/EP2015/078750**

(87) Internationale Veröffentlichungsnummer:
**WO 2016/138972 (09.09.2016 Gazette 2016/36)**

(54) **TRAGBARER REPARATURSATZ**

PORTABLE REPAIR KIT

KIT DE RÉPARATION PORTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2015 DE 102015203972**

(43) Veröffentlichungstag der Anmeldung:
**10.01.2018 Patentblatt 2018/02**

(73) Patentinhaber: **Continental Reifen Deutschland GmbH**
**30175 Hannover (DE)**

(72) Erfinder:
• **DETERING, Rainer**
**31535 Neustadt am Rbge. (DE)**
• **ZAUM, Christopher**
**30926 Seelze (DE)**
• **HUANG, Danqing**
**65760 Eschborn (DE)**
• **BIALACH, Philip Mathias**
**30659 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**EP-A1- 1 914 062        EP-A1- 2 815 875**
**DE-U1- 202005 017 071   US-A1- 2008 098 855**
**US-A1- 2011 290 372**

**Beschreibung**

Die Erfindung betrifft einen tragbaren Reparatursatz zum Abdichten und Aufpumpen von Kraftfahrzeugreifen mit einem elektrisch angetriebenen Kompressor als Druckgasquelle, mit einen Dichtmittelbehälter für ein in den Kraftfahrzeugreifen einfüllbares selbsttätiges Dichtmittel, wobei der Dichtmittelbehälter mit einer Ventileinheit für Dichtmittel und Druckgas verbunden ist und die Ventileinheit mit einer an den Kompressor anschließbaren Einlassleitung und einer an den Kraftfahrzeugreifen anschließbaren Auslassleitung versehen ist, wobei die Auslassleitung mit einem Einlass bzw. Einlassventil des Kraftfahrzeugreifens verbindbar ist, sowie mit Mitteln zur Energiezufuhr, insbesondere Stecker und Elektrokabel, und Bedienungs- und Anzeigeelementen für den Betrieb des Reparatursatzes, wobei der Reparatursatz mindestens ein Befestigungsmittel aufweist, mit dessen Hilfe der Reparatursatz im Betriebszustand an einem Fahrzeug temporär befestigbar ist.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muss der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, dass die notwendigen Reparaturmaterialien, wie etwa eine entsprechende Pumpe sowie Hebe- und Schraubwerkzeuge, sowie bei nächtlichen Pannen nötige Beleuchtungskörper, in oder bei den entsprechenden Fahrzeugen nur unvollständig oder gar nicht vorhanden oder an den unterschiedlichsten Stellen verstaut sind und lange gesucht werden müssen.

Um diese Nachteile zu vermeiden, sind bereits Reparatursätze bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann. Die Reparatursätze / Pannensets sind typischerweise im Kofferraum eines Fahrzeugs untergebracht.

Handelsübliche Pannensets zur Reifenabdichtung, die einen Kleinkompressor enthalten, können in zwei Systeme unterteilt werden.

Es gibt einerseits Systeme, bei denen das Abdichtmittel mit Hilfe des Kompressors durch den Reifenventileinsatz gepumpt und danach ohne Unterbrechung der Reifen mit Luft gefüllt wird. Andererseits gibt es Systeme, bei denen zunächst allein Dichtmittel in den Reifen eingefüllt wird. Nachdem das Dichtmittel in den Reifen gedrückt wurde, etwa mit Hilfe einer verformbaren Flasche (Quetsch-Flasche), wird der Reifenventileinsatz wieder eingeschraubt, bevor in einem zweiten Schritt der Kompressor am Reifenventil angeschlossen und der Reifen mit Luft befüllt wird. Üblicherweise stehen dabei Teile des Systems, insbesondere der Kompressor, auf dem Boden neben dem Reifen und sind mit einem ausreichend langen, druckfesten Schlauch mit dem Reifenventil verbunden.

Es ist bei beiden Systemen darauf zu achten, dass während der Benutzung alle relevanten Systeminformationen (z. B. Druckanzeige) benutzerfreundlich zur Verfügung gestellt werden.

Wenn solche Reparatursätze gebraucht werden, befindet sich der Nutzer in ungewohnter und ungeübter Situation. Die einzelnen Zubehörteile solcher Reparatursätze müssen daher "zur Hand" sein und in einer Weise miteinander verbunden oder zusammengestellt sein, die sicherstellt, dass alle Funktionsteile sich am richtigen und zum Betrieb vorgesehen Platz befinden und miteinander wirken können. Das ist nicht ganz problemlos zu gewährleisten, insbesondere dann, wenn je nach Betriebszustand zunächst Dichtmittelbehälter und diverse Schlauchverbindungen angeschlossen oder umgebaut werden müssen. Oft werden auch Systemteile verlegt, vergessen oder falsch angeschlossen.

Zur Erleichterung der Handhabung der Geräte/Reparatursätze offenbart die EP 1914062 A1 einen Reparatursatz zum Abdichten und Aufpumpen aufblasbarer Gegenstände, der mindestens ein Befestigungsmittel aufweist, mit dessen Hilfe die Einrichtung im Betriebszustand an einem Fahrzeug temporär befestigbar ist. Damit erhält man eine Verbindung zwischen den wichtigsten Bauteilen/Zubehörteilen, so dass alle Zubehörteile des Pannenhilfesets sich beim Einsatz zusammen und am richtigen Platz befinden.

Nun ist der augenblickliche Trend zu größeren Reifenabmessungen diametral zum Trend bei Pannensets, die immer kleiner und kostengünstiger werden. Einer der Zielkonflikte bei der Konstruktion kleiner Pannensets ist u.a. die Länge des Schlauches sowie die Packmaße zum Verstauen des Pannensets im Fahrzeug. Ein besonders kleiner Pannenset benötigt, wenn er auf der Erde neben dem Reifen betrieben werden soll, u.a. einen langen und flexiblen Schlauch als Verbindung zwischen einer Verteilereinheit für Druck- und Dichtmittel und dem Reifenventil, was eben gerade die Packmaße erhöht und ungewünscht ist.

Für die Erfindung bestand also die Aufgabe, einen tragbaren Reparatursatz als so genannten "Pannenset" bereitzustellen, der kleine Packmaße aufweist, sicher, einfach und möglichst bedienungsfreundlich zu handhaben ist, eine robuste Ausführung aufweist und dazu einfach und preisgünstig herzustellen ist.

Gelöst wird diese Aufgabe durch die Merkmale des Hauptanspruchs. Weitere vorteilhafte Ausbildungen sind in den Unteransprüchen offenbart.

Dabei ist der Reparatursatz mit Hilfe einer lösbaren mechanischen Verbindung der Auslassleitung mit dem Einlass bzw. Einlassventil des Fahrzeugreifens hängend befestigt, nämlich vorzugsweise in den meisten Fällen so,, dass ein Kontakt des Reparatursatzes mit dem Untergrund unnötig ist. Der Reparatursatz "hängt" dann am Reifenventil und kann dadurch unabhängig vom Fahrbahnuntergrund eingesetzt werden, kann z.B. bei unebenem oder schlammigem Seitenstreifen ohne weiteres verwendet werden, und es müssen keine separaten Schlauchverbindungen angeschlossen oder umgebaut werden. Der Bediener kann also ohne große Vorbereitungen den Reparatursatz einsetzen, indem er ihn lediglich mit dem Reifenventil verbindet.. Eine vorteilhafte Ausbildung besteht darin, dass nach der Befestigung eine betriebsbereite Ausrichtung des Reparatursatzes auch dann vorhanden ist, wenn kein Kontakt des Reparatursatzes mit dem Untergrund besteht. Unter dem Begriff" betriebsbereite Ausrichtung" versteht man in diesem Zusammenhang ein Zustand, bei der alle Funktionen des Reparatursatzes mindestens für den zur Durchführung der Funktion nötigen Zeitraum gewährleistet sind, d.h. zum Beispiel für den Zeitraum, den das Abdichten und Aufpumpen eines Reifens erfordert. Die betriebsbereite Ausrichtung ist auch dann gewährleistet, wenn kein Kontakt des Reparatursatzes mit dem Untergrund besteht.

Die Verbindung des Reparatursatzes mit dem Fahrzeug bzw. dem Einlassventil kann dabei mit üblichen Verbindungsmitteln, wie etwa Schlaufen oder Haken direkt am Ventil erfolgen, oder auch, wie es in einer vorteilhaften Weiterbildung vorgesehen ist, mit Hilfe einer Druckgas leitenden, lösbaren mechanischen Verbindung zwischen Auslassleitung und Einlass bzw. Einlassventil am Fahrzeugreifen. Damit ist in einfachster Weise eine mechanische und pneumatische Verbindung gleichzeitig entstanden.

Eine weitere vorteilhafte Ausbildung besteht darin, dass die Auslassleitung mindestens teilweise als Schlauchstück ausgebildet ist und die lösbare mechanische Verbindung als an dem Schlauchstück befindliche Schraubkappe zur Verbindung des Schlauchstücks mit dem Einlassventil ausgebildet ist. Damit wird eine leicht zu bedienende und auch allseits bekannte Art der Verbindung für den Reparatursatz bereitgestellt, so dass der Bediener keine Schwierigkeiten vor sich sieht, wenn er das System mit dem Reifenventil verbinden will. Hier dient die Verbindung neben der pneumatischen Verbindung auch als mechanische Verbindung, wobei der leicht und klein gebaute Reparatursatz über den Schlauch direkt am Reifenventil hängt. Der Schlauch ist dabei deutlich kürzer als im Stand der Technik und folgt der Maßgabe, nach der im Regelfall verhindert wird, dass der Reparatursatz mit dem Untergrund in Kontakt kommt.

Natürlich können auch beide vorteilhaften Ausbildungen der Verbindung nebeneinander existieren, also beispielsweise eine Verbindung über einen Schlauch, wobei ein Schraubverschluss am Schlauch kombiniert ist mit einer Schlaufe zur Aufhängung des Reparatursatzes am Ventilanschluss.

Eine weitere vorteilhafte Ausbildung besteht darin, dass die Anordnung der mechanischen Verbindung so ausgebildet ist, dass nach der Verbindung bzw. Befestigung der Auslassleitung am Einlass bzw. Einlassventil der tragbare Reparatursatz eine Lage einnimmt, bei der die Bedienungs- und Anzeigeelemente zur Bedienerseite zeigen und der Dichtmittelbehälter in seiner Betriebslage sich befindet. So kann beispielsweise ein besonders kurzes Schlauchstück oder auch ein Rohrstutzen als Auslassleitung, welches/welcher mit einer zur Verbindung mit dem Ventil geeigneten Schraubkappe versehen ist, dafür sorgen, dass die mit Bedienungselementen versehene Vorderseite des Kompressorgehäuses sich auf der "richtige" Seite, nämlich auf der Bedienerseite befindet und gleichzeitig die Dichtmittelflasche in ihrer richtigen Stellung steht. Bedienerseite ist ja üblicherweise nahe der Reifenaußenseite, da sich der Bediener ja auf einer Stelle vor dem Reifen bzw. vor der Felge befindet. Damit ist mit ausgesprochen einfachen Mitteln die richtige Lage zum Betrieb des Reparatursatzes festgelegt.

Eine weitere vorteilhafte Ausbildung besteht darin, dass die lösbare Verbindung eine bewegliche oder flexible Kupplung aufweist, vorzugsweise eine Drehkupplung, und der Schwerpunkt des tragbaren Reparatursatzes so ausgebildet ist, dass nach der Verbindung bzw. Befestigung der Auslassleitung am Einlass bzw. Einlassventil der tragbare Reparatursatz eine Lage einnimmt, bei der die Bedienungs- und Anzeigeelemente zur Bedienerseite zeigen und der Dichtmittelbehälter in seiner Betriebslage sich befindet. Im einfachsten Fall dreht und pendelt der Reparatursatz nach Anschluss an das Reifenventil um Letzteres bzw. den Schlauch als flexiblen Drehpunkt nach unten und richtet sich so aus, dass die Bedienungselemente auch auf der Bedienerseite sind und der Bediener gegebenenfalls nur leichte Korrekturen vornehmen muss, um die beste Position zur Bedienung zu erreichen. Um eine solche stabile Betriebslage zu gewährleisten, liegt der Schwerpunkt des hängenden Reparatursatzes Reifenpannensets im Betriebszustand vorzugweise unterhalb der Aufhängung am Ventil. Schwerkraftbedingt richtet sich das Pannenset also selbsttätig in seine Betriebslage aus. In dieser Betriebslage ist die Ventileinrichtung und das Dichtmittel in der erforderlichen Weise zum Flüssigkeitsspiegel ausgerichtet. Die somit "richtige" Positionierung des Dichtmittelbehälters berücksichtigt dann auch, dass die Höhe des Dichtmittelbehälters größerer ist als seine Breite oder Tiefe, damit um ein möglichst vollständiges Entleeren gesichert ist. Bei den gegebenen Gewichtsverhältnissen ist eine Schwerpunktänderung des Reparatursatzes durch das Auspumpen des Dichtmittels vernachlässigbar in Bezug auf die Position des hängenden Reparatursatzes am Reifen.

In eben dieser Weise oder auch unterstützend wirkt eine weitere vorteilhafte Ausbildung, die darin besteht, dass die lösbare Verbindung eine bewegliche oder flexible Kupplung aufweist, vorzugsweise eine Drehkupplung, und die Formgebung des tragbaren Reparatursatzes so ausgebildet ist, dass nach der Verbindung bzw. Befestigung der Auslassleitung am Einlass bzw. Einlassventil der tragbare Reparatursatz eine Lage einnimmt, bei der die Bedienungs- und Anzeigeelemente zur Bedienerseite zeigen und der Dichtmittelbehälter in seiner Betriebslage sich befindet.

Neben den Vorteilen bei der Bedienung stellt der erfindungsgemäße Reparatursatz ein kleineres, leichteres, kostengünstigeres Design bereit, reduziert durch einen kürzeren Schlauch den Platzbedarf und das zugehörige Gehäuse, weist ein geringeres Gesamtgewicht auf und stellt Einsparungen bei den Herstellkosten bereit. Ein verkürzter Schlauch ermöglicht durch eine sehr platzsparende Bauweise neue Möglichkeiten zum Lagern des Reparatursatzes im Fahrzeug, z.B. unterhalb der Fahrzeugsitze.

Anhand eines Ausführungsbeispiels soll die Erfindung näher erläutert werden.

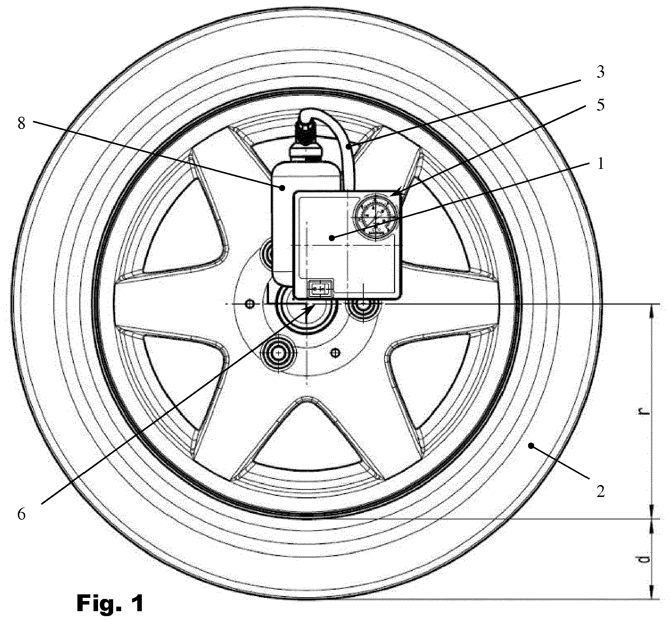

Die Figuren sind in der Zusammenschau zu betrachten. Dabei zeigt Fig. 1 einen erfindungsgemäßen tragbaren Reparatursatz 1 zum Aufpumpen eines auf eine Felge aufgezogenen Kraftfahrzeugreifens 2, wobei der Reparatursatz einen hier nicht im Detail näher dargestellten elektrisch angetriebenen Kompressor als Druckgasquelle aufweist sowie eine Einlassleitung 3, mit der der Kompressor an die Ventil- und Verteilereinheit, im weiteren kurz Ventileinheit 4 angeschlossen ist.

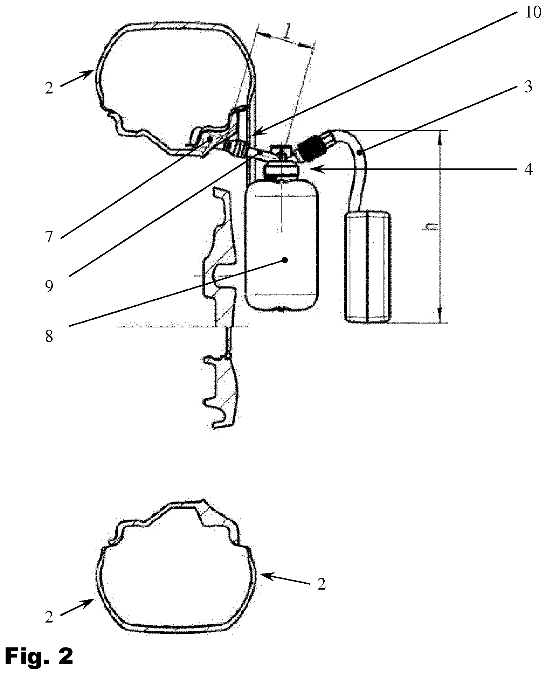

Die Fig. 1 zeigt den erfindungsgemäßen tragbaren Reparatursatz 1 an einem Reifen hängend von der Reifenseite aus gesehen. Die Fig. 2 zeigt denselben Reparatursatz 1 an einem Reifen hängend in einer Schnittansicht.

Der Reparatursatz ist mit Hilfe einer lösbaren mechanischen Verbindung der Auslassleitung 9 an dem Einlass bzw. Einlassventil 7 des Fahrzeugreifens 2 hängend befestigt.

Der Reparatursatz weist weiterhin einen Dichtmittelbehälter 8 auf für ein in den Kraftfahrzeugreifen einfüllbares selbsttätiges Dichtmittel, wobei der Dichtmittelbehälter 8 mit der Ventileinheit 4 für Dichtmittel und Druckgas verbunden ist und die Ventileinheit mit einer an den Kraftfahrzeugreifen anschließbaren Auslassleitung 9 versehen ist, wobei die Auslassleitung mit einem Einlass bzw. Einlassventil 7 des Kraftfahrzeugreifens verbunden ist.

Der Reparatursatz weist weiterhin Mittel zur Energiezufuhr, insbesondere Stecker und Elektrokabel, und Bedienungs- und Anzeigeelementen (5, 6) für den Betrieb auf.

Der Reparatursatz besitzt als temporär betätigbare lösbare mechanisch-pneumatische Verbindung zum Fahrzeugreifen bzw. zum Reifenventil eine am Ende der Auslassleitung angeordnete Schraubkappe 10 zur Verbindung der Auslassleitung 9 mit dem Einlassventil 7.

Damit hängt bei entsprechend kurz ausgebildeter Auslassleitung 9 der Reparatursatz 1 so an dem Reifenventil, dass in allen Stellungen des Reifens ein Kontakt des Reparatursatzes mit dem Untergrund unnötig ist.

Die Anordnung und der mechanisch-pneumatischen Verbindung und der Schwerpunkt des Reparatursatzes sind dabei so ausgebildet, dass nach Verbindung der Auslassleitung 9 mit dem Einlassventil 7 der Reparatursatz 1 eine Lage einnimmt, bei der die Bedienungs- und Anzeigeelemente 5, 6 zur Bedienerseite zeigen und der Dichtmittelbehälter sich in seiner aufrechten Betriebslage befindet.

In der Zusammenschau zeigen Fig. 1 und Fig. 2 im Detail die erfindungsgemässe Konstruktion des Reparatursatzes dahingehend, dass die Länge l der lösbaren mechanischen Verbindung gemäß der Formel

$$d - h < l < 2r + d - h$$

ausgebildet ist, wobei d die Seitenwandhöhe des Fahrzeugreifens ist, h die Höhe des Reparatursatzes und r der Felgenradius des Rades. Damit wird erreicht, dass in fast allen Stellungen dass des Rades bzw. des Ventileinlasses oder Reifenventil der Reparatursatz hängend positioniert ist und selbst in der untersten Stellung des Ventils mindestens schräg hängend vor der Reifenseitenwand positioniert ist und nicht auf dem Untergrund aufstehen muss.

Der hier gezeigte Reparatursatz weist vorteilhafterweise ein Gesamtgewicht von unter 1 kg auf und ist somit leicht genug um ohne Auswirkungen auf die Festigkeit des Ventils an Letzterem hängend angeordnet zu werden.

**Bezugszeichenliste**

(Teil der Beschreibung)

1    Reparatursatz
2    Kraftfahrzeugreifen
3    Einlassleitung
4    Ventil- und Verteilereinheit/ Ventileinheit des Reparatursatzes
5    Bedienungs- und Anzeigeelement
6    Bedienungs- und Anzeigeelement
7    Einlassventil
8    Dichtmittelbehälter
9    Auslassleitung
10   Schraubkappe

## Patentansprüche

1. Tragbarer Reparatursatz (1) zum Abdichten und Aufpumpen von Fahrzeugreifen, insbesondere Kraftfahrzeugreifen (2) mit einem elektrisch angetriebenen Kompressor als Druckgasquelle, mit einen Dichtmittelbehälter (8) für ein in den Kraftfahrzeugreifen einfüllbares selbsttätiges Dichtmittel, wobei der Dichtmittelbehälter (8) mit einer zum Reparatursatz gehörigen Ventil- und Verteilereinheit (4) für Dichtmittel und Druckgas verbunden ist und die Ventileinheit (4) mit einer an den Kompressor anschließbaren Einlassleitung (3) und einer an den Kraftfahrzeugreifen anschließbaren Auslassleitung (9) versehen ist, wobei die Auslassleitung (9) mit einem Einlass bzw. Einlassventil (7) des Kraftfahrzeugreifens (2) verbindbar ist, sowie mit Mitteln zur Energiezufuhr, insbesondere Stecker und Elektrokabel, und Bedienungs- und Anzeigeelementen (5, 6) für den Betrieb des Reparatursatzes, wobei der Reparatursatz (1) mindestens ein Befestigungsmittel aufweist, mit dessen Hilfe der Reparatursatz im Betriebszustand an einem Fahrzeug temporär befestigbar ist, wobei der Reparatursatz mit Hilfe einer Druckgas leitenden, lösbaren mechanischen Verbindung zwischen Auslassleitung und Einlass bzw. Einlassventil (7) am Fahrzeugreifenventil hängend und ohne Kontakt zum Untergrund in einer betriebsbereiten Ausrichtung befestigbar ist, vorzugsweise die Auslassleitung mindestens teilweise als Schlauchstück und die lösbare mechanische Verbindung als eine an dem Schlauchstück befindliche Schraubkappe zur Verbindung des Schlauchstücks mit dem Einlassventil ausgebildet sind, **dadurch gekennzeichnet, dass** die Länge l der lösbaren mechanischen Verbindung gemäß folgender Formel ausgebildet ist

$$d - h < l < 2r + d - h,$$

wobei d die Seitenwandhöhe des Fahrzeugreifens ist, h die Höhe des Reparatursatzes und r der Felgenradius des Rades.

2. Tragbarer Reparatursatz nach Anspruch 1, bei der die Anordnung der mechanischen Verbindung so ausgebildet ist, dass nach der Verbindung bzw. Befestigung der Auslassleitung am Einlass bzw. Einlassventil (7) der tragbare Reparatursatz (1) eine Lage einnimmt, bei der die Bedienungs- und Anzeigeelemente (5, 6) zur Bedienerseite zeigen und der Dichtmittelbehälter (8) in seiner Betriebslage sich befindet.

3. Tragbarer Reparatursatz nach einem der Ansprüche 1 oder 2, bei der die lösbare Verbindung eine bewegliche oder flexible Kupplung aufweist, vorzugsweise eine Drehkupplung, und der Schwerpunkt des tragbaren Reparatursatzes so ausgebildet ist, dass nach der Verbindung bzw. Befestigung der Auslassleitung am Einlass bzw. Einlassventil (7) der tragbare Reparatursatz (1) eine Lage einnimmt, bei der die Bedienungs- und Anzeigeelemente (5, 6) zur Bedienerseite zeigen und der Dichtmittelbehälter (8) in seiner Betriebslage sich befindet.

4. Tragbarer Reparatursatz nach einem der Ansprüche 1 bis 3, bei der die lösbare Verbindung eine bewegliche oder flexible Kupplung aufweist, vorzugsweise eine Drehkupplung, und die Formgebung des tragbaren Reparatursatzes (1) so ausgebildet ist, dass nach der Verbindung bzw. Befestigung der Auslassleitung am Einlass bzw. Einlassventil (7) der tragbare Reparatursatz eine Lage einnimmt, bei der die Bedienungs- und Anzeigeelemente (5, 6) zur Bedienerseite zeigen und der Dichtmittelbehälter (8) in seiner Betriebslage sich befindet.

5. Tragbarer Reparatursatz nach einem der Ansprüche 1 bis 4, dessen Gesamtgewicht kleiner als 1,5 kg ist, vorzugsweise kleiner als 1 kg.

6. Tragbarer Reparatursatz nach einem der Ansprüche 1 bis 5, bei dem die Unterseite des Dichtmittelbehälters (8) senkrecht zur Schwerkraftrichtung ausgerichtet ist, insbesondere auch nach dem Entleeren.

## Claims

1. Portable repair kit (1) for sealing and inflating vehicle tyres, in particular motor-vehicle tyres (2), having an electrically driven compressor as a compressed-gas source, having a sealant container (8) for a self-acting sealant which is introducible into the motor-vehicle tyre, wherein the sealant container (8) is connected to a valve and distributor unit (4) for sealant and compressed gas, said valve and distributor unit being part of the repair kit, and the valve unit (4) is provided with an inlet line (3), which is connectable to the compressor, and an outlet line (9), which is connectable to the motor-vehicle tyre, wherein the outlet line (9) is connectable to an inlet or inlet valve (7) of the motor-vehicle tyre (2), and also having means for energy supply, in particular a plug and an electric cable, and having operating and indicator elements (5, 6) for the operation of the repair kit, wherein the repair kit (1) has at least one fastening means, with the aid of which the repair kit, in the operating state, is temporarily fastenable to a vehicle, wherein, with the aid of a compressed-gas-conducting, releasable mechanical connection between outlet line and inlet or inlet valve (7), the repair kit is fastenable with an operationally ready orientation to the vehicle-tyre valve in a hanging manner and without contact to the underlying surface, it preferably being the case that the outlet line is at least partially in the form of a tube piece and the releasable mechanical connection is in the form of a screw-type cap situated on the tube piece and serving for connecting the tube piece to the inlet valve, **characterized in that**

the length 1 of the releasable mechanical connection is configured according to the following formula

$$d - h < 1 < 2r + d - h,$$

where d is the side-wall height of the vehicle tyre, h is the height of the repair kit and r is the rim radius of the wheel.

2. Portable repair kit according to Claim 1, in which the arrangement of the mechanical connection is configured in such a way that, after the connection or fastening of the outlet line to the inlet or inlet valve (7), the portable repair kit (1) assumes a position in which the operating and indicator elements (5, 6) point towards the operator side and the sealant container (8) is in its position for operation.

3. Portable repair kit according to either of Claims 1 and 2, in which the releasable connection has a movable or flexible coupling, preferably a rotary coupling, and the centre of gravity of the portable repair kit is configured in such a way that, after the connection or fastening of the outlet line to the inlet or inlet valve (7), the portable repair kit (1) assumes a position in which the operating and indicator elements (5, 6) point towards the operator side and the sealant container (8) is in its position for operation.

4. Portable repair kit according to one of Claims 1 to 3, in which the releasable connection has a movable or flexible coupling, preferably a rotary coupling, and the shaping of the portable repair kit (1) is configured in such a way that, after the connection or fastening of the outlet line to the inlet or inlet valve (7), the portable repair kit assumes a position in which the operating and indicator elements (5, 6) point towards the operator side and the sealant container (8) is in its position for operation.

5. Portable repair kit according to one of Claims 1 to 4, the total weight of which is less than 1.5 kg, preferably less than 1 kg.

6. Portable repair kit according to one of Claims 1 to 5, in which the bottom side of the sealant container (8) is oriented perpendicularly to the direction of gravitational force, in particular also after the emptying process.

**Revendications**

1. Kit de réparation portable (1) pour étancher et gonfler des pneus de véhicules, notamment des pneus de véhicules automobiles (2), avec un compresseur à entraînement électrique en tant que source de gaz comprimé, avec un récipient de produit d'étanchéité (8) pour un produit d'étanchéité automatique pouvant être versé dans le pneu de véhicule automobile, le récipient de produit d'étanchéité (8) étant relié à une unité de soupape et de distribution (4) pour le produit d'étanchéité et le gaz comprimé appartenant au kit de réparation, et l'unité de soupape (4) étant pourvue d'une conduite d'entrée (3) pouvant être raccordée au compresseur et d'une conduite de sortie (9) pouvant être raccordée au pneu de véhicule automobile, la conduite de sortie (9) pouvant être reliée à une entrée ou soupape d'entrée (7) du pneu de véhicule automobile (2), ainsi qu'avec des moyens d'alimentation en énergie, notamment des connecteurs et des câbles électriques, et des éléments de commande et d'affichage (5, 6) pour le fonctionnement du kit de réparation, le kit de réparation (1) présentant au moins un moyen de fixation à l'aide duquel le kit de réparation peut être fixé temporairement sur un véhicule à l'état de fonctionnement, le kit de réparation pouvant être fixé à la soupape de pneu de véhicule en suspension et sans contact avec le sol dans une orientation opérationnelle à l'aide d'une liaison mécanique amovible, conduisant le gaz comprimé, entre la conduite de sortie et l'entrée ou la soupape d'entrée (7), de préférence la conduite de sortie étant au moins partiellement réalisée sous forme de pièce de tuyau et la liaison mécanique amovible sous la forme d'un capuchon à vis se trouvant sur la pièce de tuyau pour relier la pièce de tuyau à la soupape d'entrée, **caractérisé en ce que**

la longueur l de la liaison mécanique amovible est réalisée selon la formule suivante

$$d - h < 1 < 2r + d - h,$$

où d est la hauteur de la paroi latérale du pneu de véhicule, h est la hauteur du kit de réparation et r est le rayon de jante de la roue.

2. Kit de réparation portable selon la revendication 1, dans lequel l'agencement de la liaison mécanique est réalisé de telle sorte qu'après la liaison ou la fixation de la conduite de sortie à l'entrée ou à la soupape d'entrée (7), le kit de réparation portable (1) prend une position dans laquelle les éléments de commande et d'affichage (5, 6) sont dirigés vers le côté utilisateur et le réservoir de produit d'étanchéité (8) se trouve dans sa position de fonctionnement.

3. Kit de réparation portable selon l'une quelconque des revendications 1 ou 2, dans lequel la liaison amovible présente un accouplement mobile ou flexible, de préférence un accouplement rotatif, et le centre de gravité du kit de réparation portable est réalisé de telle sorte qu'après la liaison ou la fixation de la conduite de sortie à l'entrée ou à la soupape d'entrée (7), le kit de réparation portable (1) prend une position dans laquelle les éléments de commande et d'affichage (5, 6) sont dirigés vers le côté utilisateur et le réservoir de produit d'étanchéité (8) se trouve dans sa position de fonctionnement.

4. Kit de réparation portable selon l'une quelconque des revendications 1 à 3, dans lequel la liaison amovible présente un accouplement mobile ou flexible, de préférence un accouplement rotatif, et la forme du kit de réparation portable (1) est réalisée de telle sorte qu'après la liaison ou la fixation de la conduite de sortie à l'entrée ou à la soupape d'entrée (7), le kit de réparation portable prend une position dans laquelle les éléments de commande et d'affichage (5, 6) sont dirigés vers le côté utilisateur et le réservoir de produit d'étanchéité (8) se trouve dans sa position de fonctionnement.

5. Kit de réparation portable selon l'une quelconque des revendications 1 à 4, dont le poids total est inférieur à 1,5 kg, de préférence inférieur à 1 kg.

6. Kit de réparation portable selon l'une quelconque des revendications 1 à 5, dans lequel le côté inférieur du récipient de produit d'étanchéité (8) est orienté perpendiculairement à la direction de la gravité, notamment aussi après avoir été vidé.

**Fig. 1**

**Fig. 2**

**IN DER BESCHREIBUNG AUFGEFÜHRTE DOKUMENTE**

**In der Beschreibung aufgeführte Patentdokumente**

- EP 1914062 A1